# EUROPEAN PATENT SPECIFICATION

(11) **EP 4 141 406 B1**
(45) Date of publication and mention of the grant of the patent: **26.02.2025**
(21) Application number: 21194179.4
(22) Date of filing: 31.08.2021
(51) Int. Cl.: G01M 17/06, G05D 1/00

(54) **REMOTE PERCEPTION STATION AS MAINTENANCE TRIGGER FOR AUTONOMOUS VEHICLES DEPLOYED IN AUTONOMOUS TRANSPORT SOLUTIONS**
FERNWAHRNEHMUNGSSTATION ALS WARTUNGSAUSLÖSER FÜR AUTONOME FAHRZEUGE, DIE IN AUTONOMEN TRANSPORTLÖSUNGEN EINGESETZT WERDEN
STATION DE PERCEPTION À DISTANCE COMME DÉCLENCHEUR D'ENTRETIEN POUR LES VÉHICULES AUTONOMES DÉPLOYÉS DANS LE CADRE DE SOLUTIONS DE TRANSPORT AUTONOME

(43) Date of publication of application: 01.03.2023
(73) Proprietor: Volvo Autonomous Solutions AB, 405 08 Göteborg (SE)
(72) Inventor: ASSIS DE OLIVEIRA, Roberson, 81280-330 Curitiba (BR); LI, Chao, 423 38 Torslanda (SE)
(74) Representative: Zacco Sweden AB

(56) References cited:
- EP-A2- 3 866 044
- US-A1- 2018 052 456
- US-A1- 2020 319 638
- US-A1- 2020 364 950
- US-A1- 2021 064 020
- US-A1- 2021 132 631
- US-B1- 10 395 444

## Description

### TECHNICAL FIELD

The present disclosure relates to systems, methods, and control units for detecting maintenance need of an autonomous vehicle operating as part of an autonomous cargo transport system. The disclosed techniques are particularly suitable for use with of heavy-duty vehicles, e.g., in construction equipment, forestry vehicles, and in mining vehicles.

### BACKGROUND

Autonomous vehicles lack one important actor in the determination of vehicle maintenance need: the driver. The driver usually detects the need of a re-calibration or a maintenance requirement by, e.g., hearing unusual sounds generated by the vehicle or feeling the behaviour of the vehicle in general. Autonomous vehicles typically comprise a vast number of internal sensors, where diagnostics of various driving systems are based on feedback from those sensors. Unfortunately, when signs of maintenance need are detected, such as a mechanical failure, it is often too late to send the vehicle for maintenance. Too late can mean that a faulty component has reached critical failure and may be beyond repair, or even worse, the vehicle may have become undrivable. To detect a flat tire, e.g., several kilometres of driving may be required before it is detected by the internal sensors and corresponding control system. Other issues, like a malfunctioning spring leaf brake for example, are very difficult to detect at all with internal sensors.

US 2018/052456 A1 discloses a test system for an autonomously controllable motor vehicle. A processing device is designed to assess an operability of the motor vehicle based on a comparison of scanned behavior with predetermined behavior.

EP 3 866 044 A2 discloses a road test method for an autonomous driving vehicle. The method comprises analyzing information of test parameters corresponding to autonomous driving scenarios to determine a first test result of the vehicle. This analysis is based on evaluation baselines corresponding to autonomous driving scenarios in a process during which a vehicle is travelling along a test route.

US 10 395 444 B1 discloses systems directed to vehicle self-diagnostics, where the vehicle comprises sensors perceiving objects and obstacles in an environment etc. Data from such sensors can be leveraged to determine a behavior associated with the vehicle, which is compared with an expected behavior. Based on any deviation, a fault can be determined, which in turn can diagnosed. Based on diagnosing the fault, the vehicle can determine instructions for redressing the fault.

US 2021/132631 A1 discloses a control system for a transportation vehicle.

US 2021/064020 A1 discloses a method and apparatus for vehicle control.

US 2017/0278312 A1 discloses systems and methods for automatic maintenance of autonomous vehicles. However, there is a need for improved maintenance detection for autonomous vehicles.

### SUMMARY

It is an object of the present disclosure to provide improved maintenance need detection for autonomous vehicles. This object is at least in part obtained by a system for detecting need of preventive maintenance of a vehicle operating as part of an autonomous transport system. The system comprises a control unit and a remote sensor arranged physically separated from the autonomous vehicles. The control unit is arranged to obtain, via the remote sensor, a current driving behaviour of the autonomous vehicle in a test area; obtain a baseline driving behaviour of the autonomous vehicle in the test area; determine a deviation of the current driving behaviour from the baseline driving behaviour; and detect a maintenance need of the autonomous vehicle based on the determined deviation, wherein baseline driving behaviour is obtained from one or more previous observations the autonomous vehicle (110) in the test area (121).

This technology avoids breakdown of vehicles by monitoring driving behaviour and comparing that with a baseline. Performing preventive maintenance well ahead of critical failures is cost-effective and increases the efficiency of the autonomous transport system. Machine learning algorithms can be used over time to record previously unknown behaviours from any type of vehicle.

Autonomous transport systems, such as in a mining operation, typically present an environment where each vehicle behaves in a similar way each cycle. This enables an establishment of a well-defined baseline behaviour. Any deviation from that baseline can be a cause for concern and may indicate a maintenance need. The baseline behaviour can be established without assistance from the vehicles, which is an advantage. Forward-feed loops also creates over time a span of expected deviations which could be translated in maintenance cycle optimization, avoiding unnecessary changes of components for instance: Maintenance on a need basis methodology.

Arranging the remote sensor separate from the autonomous vehicle enables the capture of data that may be difficult to obtain from internal sensors. Also, since onboard sensors are located on the ego vehicle which vibrates and presents a dynamic behaviour, some types of failures may be difficult to detect. The system may use a plurality of remote sensors, but a single sensor will suffice for monitoring a fleet of vehicles, which is cost-effective. Furthermore, using a remote sensor rather than internal sensors means that no modifications of the vehicles in the autonomous transport system are necessary, neither by adding additional sensors nor adapting existing sensors.

The system can operate independently from other control systems related to the vehicle. The obtaining of the current driving behaviour, the obtaining of the baseline driving behaviour, the determination of the deviation, and the detection of maintenance can, according to aspects, all be performed within the disclosed system. This facilitates data management since, e.g., there is no need for wireless connections loaded with large amounts of data from, e.g., movies captured by a camera constituting the sensor.

It may be difficult to detect a drifting accuracy of internal sensors inherent in autonomous vehicles when relying on the data output of those internal sensors. The disclosed system, however, can detect such drift. Usually, when internal sensors are drifting, a small degradation of the driving behaviour is noticed over time. This degradation can be observed by the disclosed system as a larger and larger deviation from a baseline driving behaviour.

According to aspects, the control unit is further arranged to determine a fault based on the determined deviation. Determining a fault can speed up the maintenance procedure of the vehicle, which improves the productivity of the autonomous transport system. The fault can comprise, i.a., any of tire wear, mechanical defects, suspension system failure, brake failure, steering system failure and sensor position disturbance.

According to aspects, the remote sensor comprises any of a camera, an IR camera, a lidar, a sonar, a microphone, and a radar. Such sensors can obtain various parameters representative of the driving behaviour and are cost-effective. Data from different sensors can be cross-checked which provides accurate information. Also, since there is no need of real-time processing, more complex algorithms can be deployed.

According to aspects, the current driving behaviour and baseline driving behaviour comprise one or more locations or travelled path of the autonomous vehicle in the test area. The travelled path is a good indicator of the driving behaviour; any deviation from a baseline path can indicate a maintenance need way ahead of critical failures. The current driving behaviour and baseline driving behaviour may alternatively, or in combination of, comprise any of velocity, acceleration, yaw, and yaw rate of the autonomous vehicle, which are also parameters representative of the driving behaviour.

According to aspects, maintenance is recommended if the deviation is a above a predetermined threshold deviation. This provides a low-complexity system for detecting a maintenance need.

According to aspects, maintenance is recommended based on a computer-implemented classification model arranged to determine a maintenance need based on the determined deviation. This provides an accurate way of detecting a maintenance need.

According to aspects, the computer-implemented classification model is based on any of a look up table and an analytical function. This can enable a quick setup of the classification model. Alternatively, or in combination of, the computer-implemented classification model is based on any of a neural network, a random forest structure, a support vector machine model, a logistic regression algorithm, a Bayes algorithm, a decision tree algorithm, and a K-nearest neighbours' algorithm. Such machine learning techniques provide adaptability and versatility for different faults or causes for maintenance needs.

As mentioned, the baseline driving behaviour is obtained from one or more previous observations the autonomous vehicle in the test area. This way, it is possible to establish a unique baseline for each vehicle in the cargo transport system. This provides a cost-effective yet accurate way of automatically detecting maintenance needs.

According to aspects, the baseline behaviour is obtained from one or more previous observations of one or more autonomous vehicles in the test area. This way, observations from a plurality of vehicles in the fleet in the autonomous transport system may be used, which may provide a more representative baseline.

According to aspects, the baseline driving behaviour is obtained from a planned driving behaviour of the autonomous vehicle. The planned driving behaviour may be what the autonomous driving system intends, e.g., an intended path. Using such data for the baseline can eliminate or reduce the need of forming the baseline based on test drives in the test area. Furthermore, the system may return a diagnostic based on the deviation to the vehicle or other system part of the autonomous driving.

According to aspects, the control unit is arranged to prompt the autonomous vehicle to perform a test case manoeuvre in the test area. This way, specific manoeuvres that are known to indicate a maintenance need when deviating from the baseline may be observed and analysed. Furthermore, the test case manoeuvres may indicate different types of faults that can be detected by the disclosed system.

There is also disclosed herein methods, computer programs, computer readable media, computer program products, control units, and vehicles associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

With reference to the appended drawings, below follows a more detailed description of embodiments of the invention cited as examples. In the drawings:
Figure 1 illustrates a system for detecting a maintenance need of an autonomous vehicle;
Figure 2 is a plot showing deviation versus time;
Figure 3 is a flow chart illustrating an example method of the present disclosure;
Figure 4 schematically illustrates a control unit; and
Figure 5 shows an example computer program product.

### DETAILED DESCRIPTION OF EXAMPLE EMBODIMENTS OF THE INVENTION

The invention will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims.

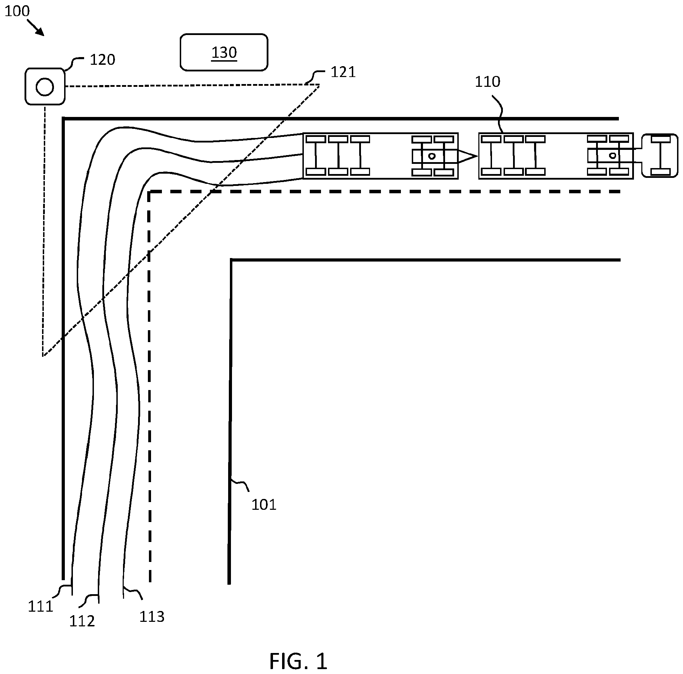

Figure 1 shows a heavy-duty vehicle 110. This particular example comprises a tractor unit towing a trailer unit, which in turn tows an additional trailer unit using a dolly unit. The vehicle combination 110 may of course also comprise additional vehicle units. The techniques disclosed herein are applicable to rigid trucks, and also to passenger cars, although the main benefit of the proposed technique is obtained when used with heavy-duty vehicle for autonomous transport system.

As mentioned, there is a need for improved systems that can detect maintenance needs of autonomous vehicles. In particular, internal sensors of autonomous vehicles typically detects faults and maintenance needs later than desired. Detecting a drifting accuracy of such internal sensor is also challenging. As of today, any diagnostics in autonomous vehicles are based on the detection of a failure, not on the prevention of it. Moreover, an autonomous vehicle typically believes its path/trajectory is followed as it should, even when an external system would not agree.

Therefore, there is herein disclosed a system 100 for detecting a maintenance need of an autonomous vehicle 110 operating as part of an autonomous transport system. The system comprises a control unit 130 and a remote sensor 120 arranged separate from the autonomous vehicle 110. The control unit is arranged to obtain, via the remote sensor 120, a current driving behaviour of the autonomous vehicle 110 in a test area 121; obtain a baseline driving behaviour of the autonomous vehicle 110 in the test area 121; determine a deviation of the current driving behaviour from the baseline driving behaviour; and detect a maintenance need of the autonomous vehicle 110 based on the determined deviation.

The disclosed system is suitable for detecting a maintenance needs of an autonomous vehicle. This includes fully autonomous vehicles and partially autonomous vehicles. In general, however, the system 100 and corresponding method disclosed herein can detect a maintenance need of vehicles where it is possible to compare a current driving behaviour to a baseline driving behaviour. To detect a maintenance need herein means to detect an anomaly in the driving behaviour resulting from a faulty component, system, subsystem etc. before critical failure.

The remote sensor 120 can be located at specific places where the driving behaviour is representative to parts of or the whole operation route. If anything in the vehicle does not look good, i.e., if the current driving behaviour deviates too much from the baseline driving behaviour according to some pre-determined metric, the vehicle 110 can be removed from operation and be brought to the maintenance workshop autonomously.

Arranging the sensor 120 separate from the autonomous vehicle 110 enables the capture of data that may be difficult to obtain from internal sensors. Arranged separate can, e.g., mean that the sensor is arranged stationary with respect to a road, such as a camera aimed at a section of the road. The system 100 may use a plurality of remote sensors 120, but a single sensor will suffice, which is cost-effective. Furthermore, using a remote sensor rather than internal sensors means that no modifications of the vehicles are necessary, neither by adding additional sensors nor by adapting existing sensors.

The system 100 can operate independently from other control systems related to the vehicle. The obtaining of the current driving behaviour, the obtaining of the baseline driving behaviour, the determination of the deviation, and the detection of maintenance can, according to aspects, all be performed within the system 100. This facilitates data management since, e.g., there is no need for wireless connections loaded with large amounts of data from, e.g., movies captured by a camera constituting the sensor 120.

The control unit 130 can be connected to vehicle 110 and other relating systems for autonomous driving. For example, the control unit can be connected to a cloud system with traffic planner functionality, which coordinates which vehicles to send to the workshop and optionally also which selects what kind of service is needed.

In general, the system 100 can take all kinds of variations possible in the driving behaviour over time. Based on that, it is possible to predict when the vehicle will should to go through maintenance and/or calibration. This way, it is possible to do maintenance before a complete breakdown.

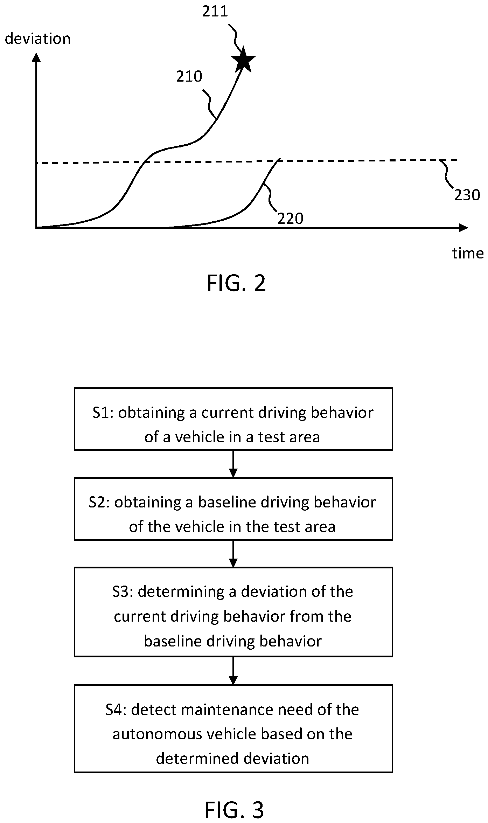

Figure 2 is a plot showing a deviation of driving behaviour versus time. A first line 210 shows a deviation increasing over time. A breakdown occurs at time instance 211. This breakdown could have been avoided if maintenance had been done well ahead of the time instance 211. A second line 220 also shows a deviation increasing over time. Here, on the other hand, the vehicle is taken out of the cargo transport system for maintenance after the deviation has reached a threshold value 230, and the breakdown therefore is avoided.

As mentioned, it may be difficult to detect a drifting accuracy of internal sensors using the internal sensors of a vehicle. The disclosed system 100, however, can detect such drift. Usually, when internal sensors are drifting, a small degradation of the driving behaviour is noticed over time. This degradation can be observed by the system 100 as a larger and larger deviation from a baseline driving behaviour.

In the example of Figure 1, the heavy-duty vehicle 110 is driving along a lane on road 101 and has just passed through a 90-degree corner. A single sensor 120 is arranged at the corner and is arranged to capture the current driving behaviour of the vehicle in the test area 120, which, in this case, covers the corner. In this example, the travelled paths 111, 112, and 113 of three points on the back of the vehicle are observed. More generally, the current driving behaviour and baseline driving behaviour may comprise one or more locations or travelled path of the autonomous vehicle 110 in the test area 121. The driving behaviour may also or alternatively comprise other data. In particular, the current driving behaviour and baseline driving behaviour may comprise any of velocity, acceleration, yaw, and yaw rate of the autonomous vehicle 110. In general, however, the driving behaviour may comprise any data representative of the operation of the vehicle.

The baseline driving behaviour is obtained from one or more previous observations the autonomous vehicle 110 in the test area 121. In the example embodiment of Figure 1, the three travelled paths across the test area may at a first instance be captured and saved as the baseline driving behaviour. Any succeeding passes across the test area may thereafter be compared to the stored baseline behaviour. The baseline behaviour may also be obtained from a plurality of observations of the vehicles in the test area, such as the average of ten controlled test runs.

The baseline driving behaviour may be unique for each single vehicle. In combination of, the base line driving behaviour may be representative for a fleet of the same model of vehicles, or even same type of vehicles. Therefore, the baseline behaviour may be obtained from one or more previous observations of one or more autonomous vehicles 110 in the test area 121. Thus, the base line behaviour can be established from a different vehicle than the one the current driving behaviour is obtained from.

According to aspects, the system 100 has access to an intended behaviour of the vehicle 110, e.g., the path the autonomous driving system is prompting the vehicle to follow. Therefore, the baseline driving behaviour may be obtained from a planned driving behaviour of the autonomous vehicle 110. In this case, the system 100 may return a diagnostic to the vehicle or other system part of the autonomous driving. The system may be integrated as part of the vehicle perception system network via, e.g., V2I (V2X) communication. Additionally, the system may be used to create a distributed perception network for the autonomous cargo transport system.

The baseline driving behaviour may be obtained from a plurality of different ways, such as the ways mentioned above or more generally any way establishing an expected behaviour of the vehicle.

The remote sensor 120 may comprise any of a camera, an IR camera, a lidar, a sonar, a microphone, and a radar. The cameras, lidar, sonar, and radar may be used to track one or more points of the vehicle 110. A microphone may be used to detect sounds from the engine, gear boxes, and actuators etc. More generally, the remote sensor can be any type of sensor that can capture data representative of the driving behaviour of the vehicle. As mentioned, the system 100 may comprise a plurality of sensors 120, which may be any combination of different types of sensors. The one or more sensors may be comprised in a single unit or be distributed. Similarly, the control unit 130 may be integrated with one or more sensors 120 or be in a separate unit. The control unit may also be distributed; it can also be cloud based.

The remote sensor 120 obtains driving behaviour of the autonomous vehicle 110 in a test area 121. This can, e.g., mean a field of view for a camera, radar, lidar etc., and/or an area where the sensor can capture data with a predetermined fidelity, such as resolution, bandwidth, dynamic range etc. As an example, the test area can include a five-by-five meter squared cross section of a road.

According to aspects, maintenance may be recommended by the control unit 130 if the deviation is a above a predetermined threshold deviation. For example, if any of the tracked paths in Figure 1 of the current observation deviates more than 20 cm from a previous pass in the test area constituting the baseline, maintenance is recommended. Different behavioural parameters, such as the travelled path of a point or the sound of the engine, may be associated with respective threshold deviations. It is also possible that a threshold deviation is obtained from a weighted averaging of deviations of different behavioural parameters.

To identify if maintenance is needed, a computer-implemented classification model can be utilized with advantage. In other words, maintenance may be recommended by the control unit 130 based on a computer-implemented classification model arranged to determine a maintenance need based on the determined deviation. In particular, such model may be a machine learning model. Machine learning generally relates to techniques where a model with a pre-determined structure is modified to provide a desired function by means of some form of training. Any machine learning model may be trained using one or more test runs in the test area and/or using simulations. For example, the computer-implemented classification model may be based on any of a neural network, a random forest structure, a support vector machine model, a logistic regression algorithm, a Bayes algorithm, a decision tree algorithm, and a K-nearest neighbours' algorithm. These models are known in general and will therefore not be discussed in more detail herein.

The classification model may also be based on other algorithms/models. In particular, the computer-implemented classification model may be based on any of a look up table and an analytical function.

According to aspects, the control unit 130 may further be arranged to determine a fault based on the determined deviation. Certain types of faults may result in a predictable deviation in the current driving behaviour compared to the baseline. A fault can be detected based on, e.g., the magnitude of the deviation of a behaviour parameter of the driving behaviour, such as how much a tracked point of the vehicle deviates from a baseline path. Faults can also be identified using a computer-implemented classification model. The fault may comprise any of tire wear, mechanical defects, suspension system failure, and brake failure. The fault can also be other type defects, wear, or such.

The system 100 can further be used to send test cases to the vehicles and monitor the feedback. Such tests can be used as a confirmation of system integrity. In other words, the control unit 130 may be arranged to prompt the autonomous vehicle 110 to perform a test case manoeuvre in the test area 121. The baseline driving behaviour may be captured during a previous test. Alternatively, or in combination of, the baseline can be established by simulations. A simulation platform may run in the control unit 130 in the system 100 and can simulate various test cases.

There is also disclosed herein a method for detecting a maintenance need of an autonomous vehicle 110, as is shown in Figure 3. The method comprises
obtaining S1, via a remote sensor 120 arranged separate from the autonomous vehicle 110, a current driving behaviour of the autonomous vehicle 110 in a test area 121,
obtaining S2 a baseline driving behaviour of the autonomous vehicle 110 in the test area 121,
determining S3 a deviation of the current driving behaviour from the baseline driving behaviour, and
detecting S4 a maintenance need of the autonomous vehicle 110 based on the determined deviation.

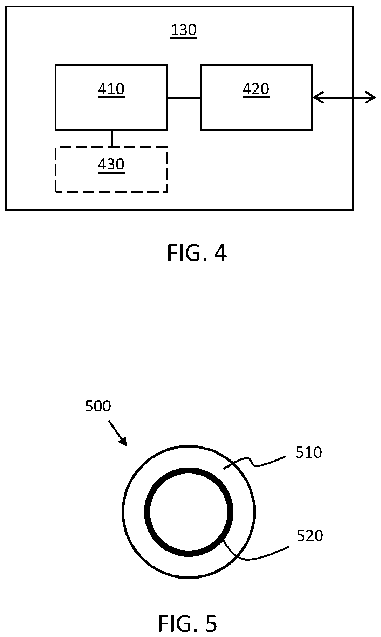

Figure 4 schematically illustrates, in terms of a number of functional units, the components of the control unit 130 according to an embodiment of the discussions herein. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 430. The processing circuitry 410 may further be provided as at least one application specific integrated circuit ASIC, or field programmable gate array FPGA.

Particularly, the processing circuitry 410 is configured to cause the control unit 130 to perform a set of operations, or steps, such as the methods discussed in connection to Figure 3. For example, the storage medium 430 may store the set of operations, and the processing circuitry 410 may be configured to retrieve the set of operations from the storage medium 430 to cause the control unit 130 to perform the set of operations. The set of operations may be provided as a set of executable instructions. Thus, the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The control unit 130 may further comprise an interface 420 for communications with at least one external device. As such the interface 420 may comprise one or more transmitters and receivers, comprising analogue and digital components and a suitable number of ports for wireline or wireless communication.

The processing circuitry 410 controls the general operation of the control unit 130 e.g., by sending data and control signals to the interface 420 and the storage medium 430, by receiving data and reports from the interface 420, and by retrieving data and instructions from the storage medium 430. Other components, as well as the related functionality, of the control node are omitted in order not to obscure the concepts presented herein.

Figure 5 schematically illustrates a computer program product 500, comprising a set of operations 520 executable by the control unit 130. The set of operations 520 may be loaded into the storage medium 430 in the control unit 130. The set of operations may correspond to the methods discussed above in connection to Figure 3.

In the example of Figure 5, the computer program product 500 is illustrated as an optical disc 510, such as a CD (compact disc) or a DVD (digital versatile disc) or a Blu-Ray disc. The computer program product could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program is here schematically shown as a track on the depicted optical disk, the computer program can be stored in any way which is suitable for the computer program product.

## Claims

1. A system (100) for detecting a maintenance need of an autonomous vehicle (110) operating as part of a cargo transport system, the system comprising a control unit (130) and a sensor (120), where the control unit is arranged to
obtain, via the sensor (120), a current driving behaviour of the autonomous vehicle (110) in a test area (121),
obtain a baseline driving behaviour of the autonomous vehicle (110) in the test area (121), determine a deviation of the current driving behaviour from the baseline driving behaviour, and
detect a maintenance need of the autonomous vehicle (110) based on the determined deviation,
**characterized in that** said sensor (120) is a remote sensor arranged separate from the autonomous vehicle and **in that** said baseline driving behaviour is obtained from one or more previous observations of the autonomous vehicle (110) in the test area (121).

2. The system (100) according to claim 1, wherein the control unit (130) is further arranged to determine a fault based on the determined deviation.

3. The system (100) according to claim 2, wherein the fault comprises any of tire wear, mechanical defects, suspension system failure, and brake failure.

4. The system (100) according to any previous claim, wherein the remote sensor (120) comprises any of a camera, an IR camera, a lidar, a sonar, a microphone, and a radar.

5. The system (100) according to any previous claim, wherein the current driving behaviour and baseline driving behaviour comprise one or more locations or travelled path of the autonomous vehicle (110) in the test area (121).

6. The system (100) according to any previous claim, wherein the current driving behaviour and baseline driving behaviour comprise any of velocity, acceleration, yaw, and yaw rate of the autonomous vehicle (110).

7. The system (100) according to any previous claim, wherein maintenance is recommended if the deviation is a above a predetermined threshold deviation.

8. The system (100) according to any previous claim, wherein maintenance is recommended based on a computer-implemented classification model arranged to determine a maintenance need based on the determined deviation.

9. The system (100) according to claim 8, wherein the computer-implemented classification model is based on any of a look up table and an analytical function.

10. The system (100) according to any of claims 8-9, wherein the computer-implemented classification model is based on any of a neural network, a random forest structure, a support vector machine model, a logistic regression algorithm, a Bayes algorithm, a decision tree algorithm, and a K-nearest neighbours' algorithm.

11. The system (100) according to any previous claim, wherein in combination of, said baseline behaviour is obtained from one or more previous observations of one or more autonomous vehicles (110) in the test area (121).

12. The system (100) according to any previous claim, wherein the baseline driving behaviour is obtained from a planned driving behaviour of the autonomous vehicle (110).

13. The system (100) according to any previous claim, where the control unit (130) is arranged to prompt the autonomous vehicle (110) to perform a test case manoeuvre in the test area (121).

14. A method for detecting a maintenance need of an autonomous vehicle (110), the method comprising
obtaining (S1), via a remote sensor (120) arranged separate from the autonomous vehicle (110), a current driving behaviour of the autonomous vehicle (110) in a test area (121), obtaining (S2) a baseline driving behaviour of the autonomous vehicle (110) in the test area (121), wherein the baseline driving behaviour is obtained from one or more previous observations the autonomous vehicle (110) in the test area (121),
determining (S3) a deviation of the current driving behaviour from the baseline driving behaviour, and
detecting (S4) a maintenance need of the autonomous vehicle (110) based on the determined deviation.

## Patentansprüche

1. System (100) zum Erkennen eines Wartungsbedarfs eines autonomen Fahrzeugs (110), das als Teil eines Frachttransportsystems betrieben wird, wobei das System eine Steuereinheit (130) und einen Sensor (120) umfasst, wobei die Steuereinheit angeordnet ist zum
Erhalten eines aktuellen Fahrverhaltens des autonomen Fahrzeugs (110) in einem Testgebiet (121) über den Sensor (120),
Erhalten eines grundlegenden Fahrverhaltens des autonomen Fahrzeugs (110) in dem Testgebiet (121),
Bestimmen einer Abweichung des aktuellen Fahrverhaltens von dem grundlegenden Fahrverhalten und
Erkennen eines Wartungsbedarf des autonomen Fahrzeugs (110) basierend auf der bestimmten Abweichung,
**dadurch gekennzeichnet, dass** der Sensor (120) ein Fernsensor ist, der getrennt von dem autonomen Fahrzeug angeordnet ist, und dass das grundlegende Fahrverhalten aus einer oder mehreren früheren Beobachtungen des autonomen Fahrzeugs (110) in dem Testgebiet (121) erhalten wird.

2. System (100) nach Anspruch 1, wobei die Steuereinheit (130) ferner dazu angeordnet ist, einen Fehler basierend auf der bestimmten Abweichung zu bestimmen.

3. System (100) nach Anspruch 2, wobei der Fehler eines von Reifenverschleiß, mechanischen Defekten, Versagen des Aufhängungssystems und Versagen der Bremse umfasst.

4. System (100) nach einem der vorhergehenden Ansprüche, wobei der Fernsensor (120) ein beliebiges von einer Kamera, einer IR-Kamera, einem Lidar, einem Sonar, einem Mikrofon und einem Radar umfasst.

5. System (100) nach einem der vorhergehenden Ansprüche, wobei das aktuelle Fahrverhalten und das grundlegende Fahrverhalten einen oder mehrere Positionen oder zurückgelegte Wege des autonomen Fahrzeugs (110) in dem Testgebiet (121) umfassen.

6. System (100) nach einem der vorhergehenden Ansprüche, wobei das aktuelle Fahrverhalten und das grundlegende Fahrverhalten ein beliebiges von Geschwindigkeit, Beschleunigung, Gier und Gierrate des autonomen Fahrzeugs (110) umfassen.

7. System (100) nach einem der vorhergehenden Ansprüche, wobei eine Wartung empfohlen wird, wenn die Abweichung über einer vorbestimmten Schwellenwertabweichung liegt.

8. System (100) nach einem der vorhergehenden Ansprüche, wobei eine Wartung basierend auf einem computerimplementierten Klassifikationsmodell empfohlen wird, das dazu angeordnet ist, einen Wartungsbedarf basierend auf der bestimmten Abweichung zu bestimmen.

9. System (100) nach Anspruch 8, wobei das computerimplementierte Klassifikationsmodell auf einer Nachschlagetabelle und einer Analysefunktion basiert.

10. System (100) nach einem der Ansprüche 8-9, wobei das computerimplementierte Klassifikationsmodell auf einem beliebigen von einem neuronalen Netzwerk, einer Random-Forest-Struktur, einem Unterstützungsvektormaschinenmodell, einem logistischen Regressionsalgorithmus, einem Bayes-Algorithmus, einem Entscheidungsbaum-Algorithmus und einem K-nächste-Nachbarn-Algorithmus basiert.

11. System (100) nach einem der vorhergehenden Ansprüche, wobei in Kombination von das grundlegende Verhalten aus einer oder mehreren früheren Beobachtungen eines oder mehrerer autonomer Fahrzeuge (110) in dem Testgebiet (121) erhalten wird.

12. System (100) nach einem der vorhergehenden Ansprüche, wobei das grundlegende Fahrverhalten aus einem geplanten Fahrverhalten des autonomen Fahrzeugs (110) erhalten wird.

13. System (100) nach einem der vorhergehenden Ansprüche, wobei die Steuereinheit (130) dazu angeordnet ist, das autonome Fahrzeug (110) aufzufordern, ein Testfallmanöver in dem Testgebiet (121) durchzuführen.

14. Verfahren zum Erkennen eines Wartungsbedarfs eines autonomen Fahrzeugs (110), das Verfahren umfassend
Erhalten (S1) eines aktuellen Fahrverhaltens des autonomen Fahrzeugs (110) in einem Testgebiet (121) über einen separat von dem autonomen Fahrzeug (110) angeordneten Fernsensor (120),
Erhalten (S2) eines grundlegenden Fahrverhaltens des autonomen Fahrzeugs (110) in dem Testgebiet (121), wobei das grundlegende Fahrverhalten aus einer oder mehreren früheren Beobachtungen des autonomen Fahrzeugs (110) in dem Testgebiet (121) erhalten wird,
Bestimmen (S3) einer Abweichung des aktuellen Fahrverhaltens von dem grundlegenden Fahrverhalten und
Erkennen (S4) eines Wartungsbedarfs des autonomen Fahrzeugs (110) basierend auf der bestimmten Abweichung.

## Revendications

1. Système (100) permettant de détecter un besoin d'entretien d'un véhicule autonome (110) fonctionnant dans le cadre d'un système de transport de marchandises, le système comprenant une unité de commande (130) et un capteur (120), où l'unité de commande est conçue pour
obtenir, via le capteur (120), un comportement de conduite actuel du véhicule autonome (110) dans une zone de test (121),
obtenir un comportement de conduite de référence du véhicule autonome (110) dans la zone de test (121),
déterminer un écart du comportement de conduite actuel par rapport au comportement de conduite de référence, et
détecter un besoin d'entretien du véhicule autonome (110) sur la base de l'écart déterminé,
**caractérisé en ce que** ledit capteur (120) est un capteur à distance disposé séparément du véhicule autonome et **en ce que** ledit comportement de conduite de référence est obtenu à partir d'une ou plusieurs observations précédentes du véhicule autonome (110) dans la zone de test (121).

2. Système (100) selon la revendication 1, dans lequel l'unité de commande (130) est en outre conçue pour déterminer un défaut sur la base de l'écart déterminé.

3. Système (100) selon la revendication 2, dans lequel le défaut comprend l'usure des pneus, des défauts mécaniques, une défaillance du système de suspension et une défaillance des freins.

4. Système (100) selon l'une quelconque des revendications précédentes, dans lequel le capteur à distance (120) comprend l'un quelconque d'une caméra, d'une caméra IR, d'un lidar, d'un sonar, d'un microphone et d'un radar.

5. Système (100) selon l'une quelconque des revendications précédentes, dans lequel le comportement de conduite actuel et le comportement de conduite de base comprennent un ou plusieurs emplacements ou trajectoire parcourue par le véhicule autonome (110) dans la zone de test (121).

6. Système (100) selon l'une quelconque des revendications précédentes, dans lequel le comportement de conduite actuel et le comportement de conduite de base comprennent l'un quelconque de la vitesse, de l'accélération, du lacet et de la vitesse de lacet du véhicule autonome (110).

7. Système (100) selon l'une quelconque des revendications précédentes, dans lequel l'entretien est recommandé si l'écart est supérieur à un écart de seuil prédéterminé.

8. Système (100) selon l'une quelconque des revendications précédentes, dans lequel l'entretien est recommandé sur la base d'un modèle de classification mis en œuvre par ordinateur conçu pour déterminer un besoin d'entretien sur la base de l'écart déterminé.

9. Système (100) selon la revendication 8, dans lequel le modèle de classification mis en œuvre par ordinateur est basé sur l'une quelconque d'une table de consultation et d'une fonction analytique.

10. Système (100) selon l'une quelconque des revendications 8 à 9, dans lequel le modèle de classification mis en œuvre par ordinateur est basé sur l'un quelconque d'un réseau neuronal, d'une structure de forêt aléatoire, d'un modèle de machine à vecteurs de support, d'un algorithme de régression logistique, d'un algorithme de Bayes, d'un algorithme d'arbre de décision et d'un algorithme des K plus proches voisins.

11. Système (100) selon l'une quelconque des revendications précédentes, dans lequel ledit comportement de base est obtenu à partir d'une ou plusieurs observations antérieures d'un ou plusieurs véhicules autonomes (110) dans la zone de test (121).

12. Système (100) selon l'une quelconque des revendications précédentes, dans lequel le comportement de conduite de base est obtenu à partir d'un comportement de conduite planifié du véhicule autonome (110).

13. Système (100) selon l'une quelconque des revendications précédentes, dans lequel l'unité de commande (130) est conçue pour inciter le véhicule autonome (110) à effectuer une manœuvre de cas de test dans la zone de test (121).

14. Procédé de détection d'un besoin d'entretien d'un véhicule autonome (110), le procédé comprenant
l'obtention (S1), par l'intermédiaire d'un capteur à distance (120) disposé séparément du véhicule autonome (110), d'un comportement de conduite actuel du véhicule autonome (110) dans une zone de test (121),
l'obtention (S2) d'un comportement de conduite de base du véhicule autonome (110) dans la zone de test (121), le comportement de conduite de base étant obtenu à partir d'une ou plusieurs observations précédentes du véhicule autonome (110) dans la zone de test (121),
la détermination (S3) d'un écart du comportement de conduite actuel par rapport au comportement de conduite de base, et
la détection (S4) d'un besoin d'entretien du véhicule autonome (110) sur la base de l'écart déterminé.
